# EUROPÄISCHE PATENTSCHRIFT

(11) **EP 2 365 274 B1**
(45) Veröffentlichungstag und Bekanntmachung des Hinweises auf die Patenterteilung: **21.09.2016**
(21) Anmeldenummer: 11156969.5
(22) Anmeldetag: 04.03.2011
(51) Int. Cl.: F41G 1/38, G02B 7/02

(54) **Zielfernrohr mit einer Umkehrsystem-Lagerung**
Telescopic sight with an inversion system bearing
Lunette de visée dotée d'un palier de système inverseur

(30) Priorität: 08.03.2010 DE 102010010688
(43) Veröffentlichungstag der Anmeldung: 14.09.2011
(73) Patentinhaber: Schmidt & Bender GmbH & Co. KG, 35444 Biebertal (DE)
(72) Erfinder: Schmitt, Christoph, 35444, Biebertal (DE); Hesse, Helke Karen, 35934 Giessen (DE); Höller, Jonas, 35510 Butzbach (DE)
(74) Vertreter: Patentanwälte Olbricht Buchhold Keulertz

(56) Entgegenhaltungen:
- DE-U1-202006 000 977
- US-A- 5 671 088
- US-A1- 2006 061 883
- US-B1- 6 449 108

## Beschreibung

Die Erfindung betrifft ein Zielfernrohr mit einer Umkehrsystem-Lagerung gemäß dem Oberbegriff von Anspruch 1.

In handelsüblichen Zielfernrohren, wie sie beispielsweise für Schusswaffen verwendet werden, wird das anvisierte Ziel in der Objektivebene seitenverkehrt und auf dem Kopf stehend abgebildet. Um dies zu korrigieren, verwendet man für gewöhnlich ein optisches Umkehrsystem, welches das Bild aufrichtet und es in der Okularebene, wo es betrachtet wird, abbildet. Das Umkehrsystem besteht aus mindestens zwei optischen Elementen, i.d.R. aus so genannten Kittlinsen, welche jeweils in eine Fassung eingebracht sind. In gängigen Zielfernrohren ist in der Objektiv- oder Okularebene ein Absehen vorgesehen und das Umkehrsystem ist in einem Innentubus des Zielfernrohrs angeordnet. Die Abstände zwischen den Elementen des optischen Umkehrsystems und der Objektivebene des Zielfernrohrs können variiert werden. Dadurch kann die Vergrößerung verändert werden.

Gewöhnlich wird die Änderung des Abstands zwischen der Objektivebene und den Umkehrsystemlinsen durch Verschieben der Linsenfassungen bewirkt. In bekannten Zielfernrohren enthält der Innentubus daher eine Verstelleinrichtung mit der die Positionen der Umkehrsystemlinsen justiert werden können. Diese Verstelleinrichtung ist meist aus einer Führungshülse und wenigstens zwei in dieser Führungshülse angeordneten Fassungen, welche die Linsen des optischen Umkehrsystems enthalten, aufgebaut. Die Fassungen sind in der Führungshülse entlang der Längsachse des Zielfernrohrs beweglich, wobei die Fassungen und die Führungshülse gleitend zueinander gelagert sind. Um einen nahezu spielfreien Lauf dieser gleitenden Lagerung zu erreichen, müssen die Fassungen präzise in die Führungshülse eingepasst werden.

Dies ist mit mehreren Nachteilen verbunden. Zum einen stellt das Einpassen der Fassungen in die Führungshülse einen zusätzlichen Arbeitsschritt dar, durch welchen die Fertigungsdauer sowie die Herstellkosten negativ beeinflusst werden. Zum anderen bilden die Führungshülse und die eingepassten Fassungen eine individuell aufeinander abgestimmte Baugruppe. Bei der Herstellung muss daher sichergestellt werden, dass die einzelnen Bauteile während der nachfolgenden Fertigungsschritte einander zweifelsfrei zugeordnet werden können. Nur so kann sichergestellt werden, dass die spezifisch abgestimmte Baugruppe schlussendlich planungsgemäß in einen Innentubus eingebaut wird. Dies ist nicht nur umständlich, sondern birgt auch ein erhöhtes Risiko im Bezug auf Produktionsfehler, so dass eine derartige Ausgestaltung unter dem Gesichtspunkt der Qualitätssicherung ebenfalls äußerst unvorteilhaft ist.

Eine leichtgängige Gleitlagerung, wie sie die Verstelleinrichtung des Umkehrsystems aufweist, erfordert die Verwendung von Materialien mit geringen Reibungskoeffizienten. Im Rahmen der bekannten Zielfernrohre verursachen diese Materialanforderungen eine hinderliche Einschränkung bezüglich der Werkstoffe, die zur Fertigung der Fassungen und der Führungshülse verwendet werden können. Viele Materialien mit guten Gleiteigenschaften weisen beispielsweise auch eine hohe Dichte auf. Dies ist besonders nachteilig, da aus solchen Materialien gefertigte Bauteile ein verhältnismäßig hohes Gewicht besitzen.

Ein weiterer wichtiger Aspekt im Hinblick auf die Werkstoffwahl sind die Materialkosten. In den bekannten Zielfernrohren werden zur Herstellung der Gleitlagerungen häufig kostenintensive Hochleistungsstähle oder Aluminium verwendet.
US 2006/061883 A1 offenbart ein Zielfernrohr mit einem Innentubus in einem Außentubus. Im Innentubus sind zwei optische Elemente mit Fassungen längsverschieblich gelagert. In die äußere Mantelfläche der Fassungen ist jeweils eine Ausnehmung eingebracht. In der Ausnehmung ist eine metallische Bogenfeder angeordnet, welche endseitig auf dem Boden der Ausnehmung aufliegt und auf der erhabenen Seite gegen den Innentubus drückt. Aufgabe der vorliegenden Erfindung ist daher, diese und weitere Nachteile des Standes der Technik zu überwinden, und ein Zielfernrohr zur Verfügung zu stellen, welches eine einpassfreie Umkehrsystem-Lagerung mit einem geringen Reibwiderstand aufweist. Ferner soll die Lagerung einen nahezu spielfreien Lauf der Fassungen in der Führungshülse gewährleisten, und das Zielfernrohr soll kostengünstig und mit einfachen Mitteln herstellbar sein.

Hauptmerkmale der Erfindung sind im kennzeichnenden Teil von Anspruch 1 angegeben. Ausgestaltungen sind Gegenstand der Ansprüche 2 bis 7.

Bei einem Zielfernrohr umfassend einen Außentubus und einen darin angeordneten Innentubus, wobei der Innentubus ein optisches Umkehrsystem mit mindestens zwei in Fassungen eingefassten optischen Elementen aufweist, die in Richtung der Längsachse des Zielfernrohrs beweglich gelagert sind, wobei durch die Bewegung der optischen Elemente, eine Veränderung der Vergrößerung bewirkbar ist, wobei die Fassungen innerhalb einer Führungshülse durch ein elastisches Mittel vorgespannt gelagert sind, wobei die Fassungen Mantelflächen aufweisen und in wenigstens einer Mantelfläche eine Ausnehmung vorgesehen ist, und wobei das Mittel in die Ausnehmung einbringbar ist, sieht die Erfindung vor, dass das elastische Mittel kugelförmig ausgebildet und aus Polytetrafluorethylen, Polyoxymethylen, Polyetheretherketon oder Polyvinylidenfluorid gefertigt ist.

Das elastische Mittel bewirkt eine vorgespannte Lagerung der Fassungen innerhalb der Führungshülse. So ist es möglich Fertigungstoleranzen auszugleichen, weshalb ein präzises Einpassen der Fassungen in die Führungshülse entfallen kann. Der Herstellprozess wird dadurch deutlich vereinfacht. Das elastische Mittel sorgt somit für eine konstante Anlage der Fassung an der Führungshülse. Verkantungen oder außerzentrische Verschiebungen der Fassungen innerhalb der Führungshülse werden somit vermieden.

Durch die erfindungsgemäße Ausgestaltung wird der Herstellprozess ferner auch insofern vereinfacht, als dass die einzelnen Komponenten des Innentubus des Zielfernrohrs die Fertigung vollkommen unabhängig voneinander durchlaufen können. Vor der Erfindung waren Fassungen und Führungshülse immer genau aufeinander geschliffen. Jede Fassung passte in nur eine Führungshülse. Dies machte eine standardisierte Fertigung des Umkehrsystems nahezu unmöglich. Durch die Erfindung ist das Risiko von Fertigungsfehlern nun deutlich reduziert.

Die Fassungen können an den Mantelflächen an der Führungshülse entlang gleiten. Verkantungen der Fassungen relativ zur Führungshülse werden somit nahezu ausgeschlossen.

Dadurch dass in wenigstens einer Mantelfläche eine Ausnehmung vorgesehen ist, wird eine besonders vorteilhafte Möglichkeit zur Aufnahme des Mittels in der Fassung geschaffen. Die Mantelfläche ist rundum gut zugänglich, weshalb das Mittel problemlos eingesetzt werden kann. Die Ausnehmung reduziert zudem die Reibung an der Kontaktfläche zwischen der Führungshülse und der Fassung, da die Kontaktfläche der Fassung durch die Ausnehmung verkleinert wird.

Vorteilhafterweise ist diese Ausnehmung eine parallel zur Längsachse ausgebildete Nut. Beim Verschieben der Fassungen innerhalb der Führungshülse wirken somit auf das elastische Mittel keine Scherkräfte. Durch diese Ausgestaltung wird die Lebensdauer des elastischen Mittels erhöht.

Bevorzugt ist weiterhin, dass mindestens eine Fassung aus Kunststoff gefertigt ist. Die Reibung zwischen den Fassungen und der Führungshülse kann so noch einmal deutlich reduziert werden. Zudem verringert sich das Gewicht des Umkehrsystems und damit auch das Gewicht des Zielfernrohrs.

Eine besonders bevorzugte Ausführungsform sieht vor, dass die Fassung aus Polytetrafluorethylen, Polyoxymethylen, Polyetheretherketon oder Polyvinylidenfluorid gefertigt ist. Diese Materialien weisen besonders geringe Reibungskoeffizienten und eine hohe Temperaturbeständigkeit auf. Dadurch kann unter anderem der sichere Einsatz des Zielfernrohrs unter verschiedensten klimatischen Bedingungen gewährleistet werden. Zudem zeigen Fassungen aus diesen Materialien unter mechanischer Belastung einen erfreulich geringen Abrieb, so dass eine langlebige und störungsfreie Gleitlagerung der Fassungen in der Führungshülse sichergestellt wird.

Bei Polytetrafluorethylen weisen Haftreibungskoeffizient und Gleitreibungskoeffizient nahezu gleiche Werte auf. Fassungen aus diesen Materialien ermöglichen vor allem bei kleinen Änderungen ein präzises Verstellen der optischen Elemente des Umkehrsystems, da das gemeinhin beobachtete 'Rucken' bei Bewegungsbeginn entfällt.

Dadurch dass das Mittel in die Ausnehmung einbringbar ist, ist die Montage des Umkehrsystems erleichtert. Dabei wird zuerst das elastische Mittel in die Ausnehmung der Fassung eingesetzt. Anschließend kann die Fassung zusammen mit dem bereits eingesetzten elastischen Mittel in die Führungshülse eingebracht werden.

Ein weiterer Vorteil ist, dass das Mittel aus Kunststoff gefertigt ist. Dies ist besonders geeignet, da Kunststoffe im Hinblick auf die angestrebte Anwendung äußert vorteilhafte Materialeigenschaften aufweisen. Dazu zählen unter anderem eine kleine Reibzahl und ein vergleichsweise geringes Gewicht.

Die Ausgestaltung des Mittels aus Polytetrafluorethylen, Polyoxymethylen, Polyetheretherketon oder Polyvinylidenfluorid ist besonders vorteilhaft, weil aus diesen Materialien gefertigte Mittel eine besonders geringe Reibung und eine hohe Temperaturbeständigkeit in einem breiten Temperaturbereich aufweisen. Zudem zeigen solche Mittel bei mechanischer Belastung einen geringen Abrieb, wodurch eine langlebige und störungsfreie Lagerung der Fassungen erreicht wird.

Eine weitere wichtige Ausgestaltung sieht vor, dass das Mittel an wenigstens einer Fassung befestigt ist. Auf diese Weise wird die Montage erleichtert, da ein Herausfallen des Mittels nach dem Einsetzen in die Fassung verhindert wird.

Bevorzugt ist weiterhin, dass die Führungshülse aus Kunststoff gefertigt ist. Dies ist eine besonders zweckdienliche Ausführungsform, da Kunststoffe geringe Reibungskoeffizienten aufweisen. Die Materialeigenschaften des Kunststoffs können gegebenenfalls durch Beimischungen gezielt auf die Anforderungen der Führungshülse abgestimmt werden.

Davon ausgehend ist es bevorzugt, dass die Führungshülse aus Polytetrafluorethylen, Polyoxymethylen, Polyetheretherketon oder Polyvinylidenfluorid gefertigt ist. Wichtige Vorteile solcher Führungshülsen sind unter anderem das geringe Gewicht sowie die geringe Reibung zwischen der Führungshülse und der Fassung.

Eine weitere besonders wichtige Ausgestaltung der Erfindung sieht vor, dass die Fassungen innerhalb der Führungshülse durch das Mittel in eine Richtung lokal vorgespannt gelagert sind. Auf diese Weise kann ein unerwünschtes Spiel der Lagerung besonders wirksam verhindert bzw. die bevorzugte Lage der Fassung in der Führungshülse sehr wirksam stabilisiert werden. Vorteilhaft in diesem Zusammenhang ist außerdem eine Ausgestaltung, bei der in jeder Fassung jeweils wenigstens zwei Ausnehmungen und zwei Mittel vorgesehen sind.

Darüber hinaus hat sich eine Ausführungsform, bei der das Mittel derart ausgebildet ist, dass eine punktartige Vorspannung zur Lagerung vorliegt, als besonders günstig erwiesen. Bei einer punktartigen Vorspannung ist die Toleranz der Lagerung deutlich geringer als bei einer flächig-wirkenden Vorspannung, die eine verhältnismäßig breite Gleichgewichtslage aufweist. Die geringe Toleranz ermöglicht eine besonders exakte Führung der Fassungen in der Führungshülse und ist daher von großem Vorteil.

Bevorzugt ist weiterhin, dass zur Bewegung der Fassungen in der Führungshülse jeweils ein Mitnehmerstift vorgesehen ist, der an der jeweiligen Fassung festgelegt ist, und dass das Mittel derart in der Fassung angeordnet ist, dass es mit dem zugehörigen Mitnehmerstift relativ zur Längsachse A als Scheitelpunkt einen Winkel α bildet, der zwischen 5° und 80°, bevorzugt 10° und 60°, besonders bevorzugt zwischen 15° und 50° und ganz besonders bevorzugt zwischen 20° und 45° liegt. Bei dieser Ausführungsform wird die Fassung, durch die beim Einbringen in die Führungshülse von dem elastischen Mittel ausgeübte Kraft, im Wesentlichen gegen die dem Mitnehmerstift entgegengesetzt liegende Innenfläche der Führungshülse gedrückt. Dies reduziert das Spiel der Fassung deutlich und verhindert daher in äußerst effektiver Weise ein Verkippen oder Verkanten beim Bewegen der Fassung in der Führungshülse.

In einer andersartigen Ausgestaltung der Erfindung ist die Ausnehmung kreisförmig ausgebildet. Dies hat sich als besonders vorteilhaft im Hinblick auf die zum Erzeugen eines spielfreien Laufs sehr wichtige Stabilisierung der Fassungen erwiesen. Eine kreisförmige Ausnehmung kann im einfachsten Fall durch eine Bohrung bereitgestellt werden, weshalb eine derartige Ausgestaltung auch fertigungstechnisch von großem Vorteil ist.

Ein Vorteil des kugelförmig ausgebildeten Mittels ist, dass dieses von allen Seiten die gleiche Kraft aufnehmen kann. Hierdurch ist die relative Orientierung, die ein solches Mittel in der Fassung einnimmt unbedeutend. Eine derartige Ausgestaltung vereinfacht daher die Fertigung und minimiert zudem mögliche Fehlerquellen.

Weitere Merkmale, Einzelheiten und Vorteile der Erfindung ergeben sich aus dem Wortlaut der Ansprüche sowie aus den folgenden Beschreibungen von Ausführungsbeispielen anhand der Zeichnungen.

Es zeigen:
- Figur 1: einen Querschnitt durch ein erfindungsgemäßes Zielfernrohr;
- Figur 2: ein Längsschnitt durch ein Umkehrsystem eines erfindungsgemäßes Zielfernrohrs;
- Figur 3: eine Explosionszeichnung einer Fassung eines erfindungsgemäßen Zielfernrohrs;
- Figur 4: eine Detailansicht eines erfindungsgemäßen Zielfernrohrs mit einer in einer Führungshülse angeordneten Fassung.

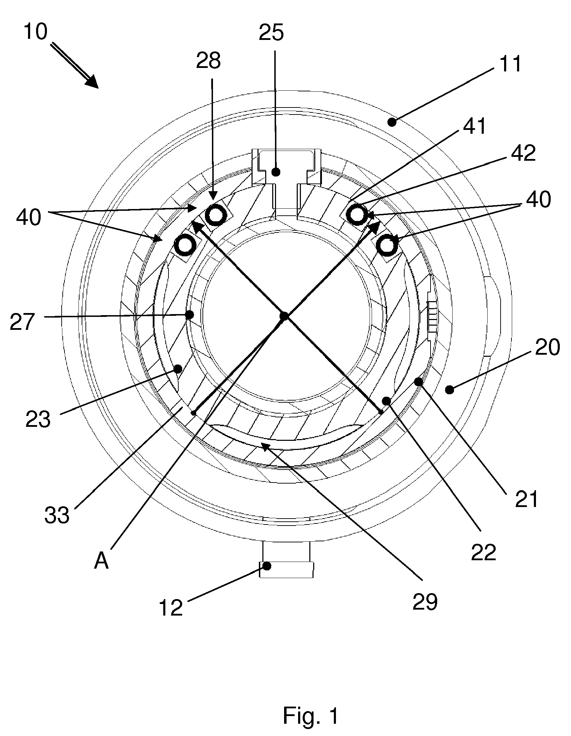

In Figur 1 ist ein Querschnitt durch ein erfindungsgemäßes Zielfernrohr 10 dargestellt.

Das Zielfernrohr 10 verfügt über einen Außentubus 11, in dem konzentrisch ein Innentubus 20 angeordnet ist. Am Außentubus 11 befindet sich ein Verstellturm 12, der bis zum Innentubus 20 in den Außentubus 11 hineinragt und ein Verstellen des Innentubus 20, z.B. zum Ausgleich von Seitenwind, bewirken kann. Je nach Anwendung kann das Zielfernrohr 10 ebenfalls mit weiteren Verstelltürmen ausgestattet sein. In dem Innentubus 20 sind eine Schneckenhülse 21, eine Führungshülse 22 und eine erste Fassung 23 konzentrisch zueinander angeordnet. Die Schneckenhülse 21 ist um die Längsachse A drehbar gelagert und die Führungshülse 22 ist über ein Kugelgelenk am Innentubus 20 befestigt.

Die Schneckenhülse 21 verfügt entlang der Längsachse A über eine schneckenförmige Ausnehmung, in der ein Mitnehmerstift 25 gelagert ist. Im Inneren der Schneckenhülse 21 befindet sich die Führungshülse 22. Die Führungshülse 22 weist entlang der Längsachse A eine lineare Ausnehmung 32 auf, in welcher der Mitnehmerstift 25 ebenfalls beweglich gelagert ist. In der Führungshülse 22 befindet sich die Fassung 23. Der Mitnehmerstift 25 ist mit der Fassung 23 fest verbunden. Beim Verdrehen der Schneckenhülse 21 bewegt sich der Mitnehmerstift 25 samt der Fassung 23 gleichzeitig in den Führungen von Schneckenhülse 21 und Führungshülse 22. Das Zusammenwirken der schneckenförmigen Führung des Mitnehmerstifts 25 in der Schneckenhülse 21, mit der linearen Führung des Mitnehmerstifts 25 in der Führungshülse 22, schafft somit ein Mittel, um aus einer Drehbewegung der Schneckenhülse 21 um die Längsachse A, eine Bewegung der Fassung 23 entlang der Längsachse A zu erzeugen.

Der dargestellte Querschnitt zeigt nur eine Fassung 23 und ihren zugehörigen Mitnehmerstift 25, insgesamt enthält das Zielfernrohr 10 jedoch wenigstens zwei Fassungen mit zwei Mitnehmerstiften, die jeweils in schneckenförmigen Ausnehmungen der Schneckenhülse 21 beweglich gelagert sind. Außerdem umfasst das Zielfernrohr 10 ein nicht dargestelltes Bedienmittel, durch das die Schneckenhülse 21 relativ zur Führungshülse 22 gedreht werden kann.

Die erste Fassung 23 verfügt in der Mantelfläche 33 über insgesamt vier Ausnehmungen 28. In der dargestellten Ausführungsform ist das Mittel 40 in diese Ausnehmungen 28 eingebracht. Das Mittel 40 bewirkt dabei ein elastisches Vorspannen der ersten Fassung 23 gegen die Führungshülse 22.

In der gezeigten Ausführung wird das Mittel 40 von vier schlauchartigen Einsätzen 41 gebildet. Diese Einsätze 41 ragen geringfügig über die Ausnehmungen 28 hinaus und sorgen so für eine elastische Vorspannung zwischen der Fassung 23 und der Führungshülse 22. Die Elastizität des Mittels 40 wird durch die vorgesehene Hohlkammer 42 in den Einsätzen entscheidend beeinflusst. Die schlauchartige Ausbildung des elastischen Mittels ist nicht vom Schutzbereich des Anspruchs 1 umfasst.

In der ersten Fassung 23 ist ein Vorschraubring 27 angeordnet, der wenigstens eine Linse des Umkehrsystems befestigt. Die erste Fassung 23 weist in ihrer Mantelfläche 33, verglichen mit einer kreiszylinderförmigen Ausgestaltung, neben den Ausnehmungen 28, drei Aussparungen 29 auf. Die Gleitreibung zwischen der ersten Fassung 23 und der Führungshülse 22 ist von der Kontaktfläche zwischen den beiden Bauteilen abhängig. Die Aussparungen 29 dienen dazu, den Reibwiderstand der Gleitlagerung herabzusetzen.

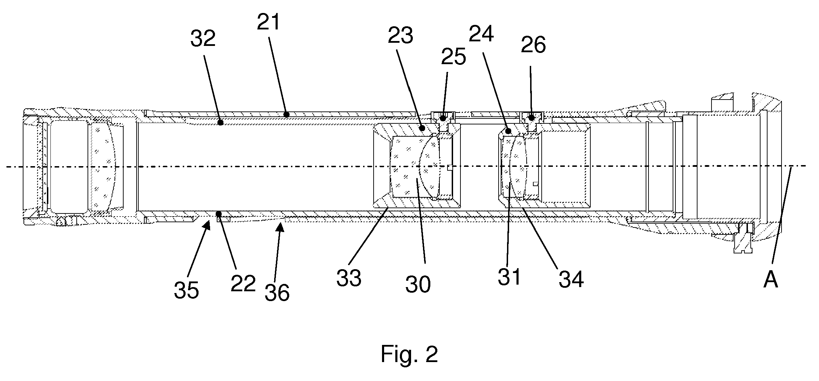

Figur 2 zeigt einen Längsschnitt durch ein Umkehrsystem eines erfindungsgemäßen Zielfernrohrs 10. Der Längsschnitt zeigt eine Schneckenhülse 21 in der eine Führungshülse 22 angeordnet ist. In der Führungshülse 22 sind eine erste Fassung 23, mit einer ersten Linse 30, und eine zweite Fassung 24, mit einer zweiten Linse 31, konzentrisch gelagert.

In einer ersten schneckenförmigen Ausnehmung 35 in der Schneckenhülse 21 ist ein erster Mitnehmerstift 25 entlang der Längsachse A geführt gelagert; in einer weiteren schneckenförmigen Ausnehmung 36 ist ein zweiter Mitnehmerstift 26 entlang der Längsachse A geführt gelagert. Der erste Mitnehmerstift 25 ist in der ersten Fassung 23 festgelegt; der zweite Mitnehmerstift 26 ist in der zweiten Fassung 24 festgelegt. Die schneckenförmigen Ausnehmungen 35, 36 in der Schneckenhülse 21 sind bevorzugt als Längsschlitze ausgebildet. Die Führungshülse 22 verfügt über eine lineare Ausnehmung 32, welche parallel zur Längsachse A des Zielfernrohrs 10 ausgebildet ist. In dieser linearen Ausnehmung 32 sind der erste Mitnehmerstift 25 und der zweite Mitnehmerstift 26 beweglich gelagert. Die Führungshülse 22 ist über ein Kugelgelenk am Innentubus 20 befestigt. Durch die Mitnehmerstifte 25 und 26 können die Fassungen 23 und 24 durch Drehen der Schneckenhülse 21 in der Führungshülse 22 entlang der Längsachse A bewegt werden. Das Zielfernrohr 10 verfügt über eine Vorrichtung mit der das Drehen der Schneckenhülse 21 bewirkt werden kann. Eine solche Vorrichtung, die beispielsweise ein Verstellring sein kann, ist vorzugsweise am Außentubus angeordnet.

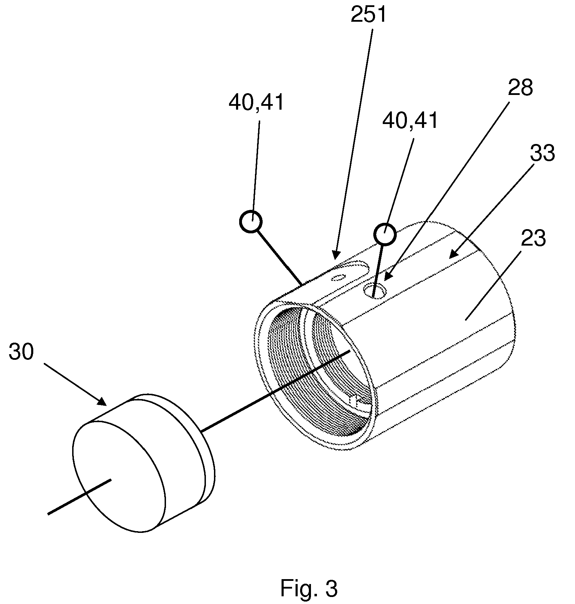

Figur 3 zeigt eine Detailansicht einer Fassung 23 eines erfindungsgemäßen Zielfernrohrs, mit einem in der Fassung 23 vorgesehenen optischen Element 30 und zwei kugelförmigen Einsätzen 41 eines Mittels 40, zur vorgespannten Lagerung der Fassung 23 in einer nicht dargestellten Führungshülse.

Zur Aufnahme der beiden kugelförmigen Einsätze 41, des Mittels 40, sind in einer Mantelfläche 33 der Fassung 23 zwei kreisförmige Ausnehmungen 28 vorgesehen. Die Ausnehmungen 28 sind derart ausgebildet, dass die Einsätze 41 im eingesetzten Zustand jeweils geringfügig über die Fassung 23 hinausragen und so eine elastische Vorspannung zwischen der Fassung 23 und einer Führungshülse eines erfindungsgemäßen Zielfernrohrs bewirken.

Zwischen den beiden Ausnehmungen 28 ist eine Halterung 251 vorgesehen, mit Hilfe derer ein nicht dargestellter Mitnehmerstift z.B. über ein Gewinde mit der Fassung 23 fest verbunden werden kann.

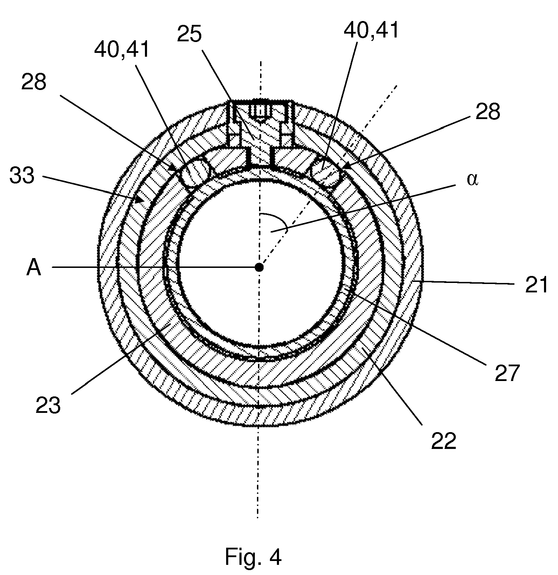

Figur 4 zeigt eine Detailansicht, eines erfindungsgemäßen Zielfernrohrs mit einer in einer Führungshülse 22 angeordneten Fassung 23, im Querschnitt.

Die Führungshülse 22 ist konzentrisch in einer Schneckenhülse 21 angeordnet. Sowohl die Führungshülse 22, als auch die Schneckenhülse 21, weisen eine Ausnehmung auf, in der ein Mitnehmerstift 25 beweglich gelagert ist. Die Ausnehmung der Schneckenhülse 21 ist schneckenartig ausgebildet, die Ausnehmung der Führungshülse 22 ist linear entlang einer Längsachse A ausgebildet. Im Inneren der Führungshülse 22 ist die Fassung 23 angeordnet. Der Mitnehmerstift 25 ist mit der Fassung 23 fest verbunden. Beim Verdrehen der Schneckenhülse 21 bewegt sich der Mitnehmerstift 25 mitsamt der Fassung 23 in den Ausnehmungen der Schneckenhülse 21 und der Führungshülse 22. Zum Verdrehen der Schneckenhülse 21 kann beispielsweise ein von der Außenseite des Zielfernrohrs gut zugänglicher Verstellring vorgesehen sein. In der Fassung 23 ist ein Vorschraubring 27 zur Aufnahme eines optischen Elements angeordnet.

Die Fassung 23 verfügt über eine Mantelfläche 33, in der zwei kreisförmige Ausnehmungen 28 zur Aufnahme jeweils eines kugelförmigen Einsatzes 41, des Mittels 40, vorgesehen sind. Die beiden Ausnehmungen 28 sind in der Fassung 23 derart angeordnet, dass die beiden Einsätze 41, des Mittels 40, zusammen mit dem Mitnehmerstift 25 jeweils relativ zu einer Längsachse A als Scheitelpunkt einen Winkel α bilden, der in der dargestellten Ausführungsform zwischen 20° und 45° liegt. In der gezeigten Detailansicht ist dieser Winkel α aus Gründen der Übersichtlichkeit lediglich für den rechts angeordneten Einsatz 41 dargestellt.

Die beiden kugelförmigen Einsätze 41 bewirken ein elastisches Vorspannen der Fassung 23 gegen die Führungshülse 22. Die Vorspannung ist dabei in einer Richtung punktartig ausgebildet, und weist daher eine besonders enge gefasste Gleichgewichtslage auf. Durch diese Ausgestaltung kann somit eine besonders geringe Lager-Toleranz bzw. eine besonders exakte Führung der Fassung 23 in der Führungshülse 22 erreicht werden. Die Elastizität des Mittels 40 wird von dem Material der Einsätze 41 beeinflusst.

### Bezugszeichenliste

- A: Längsachse
- α: Winkel

- 10: Zielfernrohr
- 11: Außentubus
- 12: Verstellturm

- 20: Innentubus
- 21: Schneckenhülse
- 22: Führungshülse
- 23: erste Fassung
- 24: zweite Fassung
- 25: erster Mitnehmerstift
- 251: Halterung
- 26: zweiter Mitnehmerstift
- 27: Vorschraubring
- 28: Ausnehmung
- 29: Aussparung
- 30: erstes optisches Element
- 31: zweites optisches Element
- 32: lineare Ausnehmung
- 33: erste Mantelfläche
- 34: zweite Mantelfläche
- 35: schneckenförmige Ausnehmung
- 36: schneckenförmige Ausnehmung

- 40: Mittel
- 41: Einsätze
- 42: Hohlkammer

## Patentansprüche

1. Zielfernrohr (10) umfassend einen Außentubus (11) und einen darin angeordneten Innentubus (20), wobei der Innentubus (20) ein optisches Umkehrsystem mit mindestens zwei in Fassungen (23,24) eingefassten optischen Elementen (30,31) aufweist, die in Richtung der Längsachse (A) des Zielfernrohrs beweglich gelagert sind, wobei durch die Bewegung der Elemente (30,31), eine Veränderung der Vergrößerung bewirkbar ist, wobei die Fassungen (23,24) innerhalb einer Führungshülse (22) durch ein elastisches Mittel (40) vorgespannt gelagert sind, wobei die Fassungen (23,24) Mantelflächen (33,34) aufweisen und in wenigstens einer Mantelfläche (33,34) eine Ausnehmung (28) vorgesehen ist, und wobei das Mittel (40) in die Ausnehmung (28) einbringbar ist, **dadurch gekennzeichnet, dass** das elastische Mittel (40) kugelförmig ausgebildet und aus Polytetrafluorethylen, Polyoxymethylen, Polyetheretherketon oder Polyvinylidenfluorid gefertigt ist.

2. Zielfernrohr (10) nach Anspruch 1, **dadurch gekennzeichnet, dass** die Ausnehmung (28) eine parallel zur Längsachse (A) ausgebildete Nut ist.

3. Zielfernrohr (10) nach einem der vorhergehenden Ansprüche, **dadurch gekennzeichnet, dass** die Fassungen (23,24) innerhalb der Führungshülse (22) durch das Mittel (40) in eine Richtung lokal vorgespannt gelagert sind.

4. Zielfernrohr (10) nach Anspruch 3, **dadurch gekennzeichnet, dass** in jeder Fassung (23,24) jeweils wenigstens zwei Ausnehmungen (28) und zwei Mittel (40) vorgesehen sind.

5. Zielfernrohr (10) nach einem der Ansprüche 3 oder 4, **dadurch gekennzeichnet, dass** das Mittel (40) derart ausgebildet ist, dass eine punktartige Vorspannung zur Lagerung vorliegt.

6. Zielfernrohr (10) nach einem der Ansprüche 3 bis 5, **dadurch gekennzeichnet, dass** zur Bewegung der Fassungen (23,24) in der Führungshülse (22) jeweils ein Mitnehmerstift (25,26) vorgesehen ist, der an der jeweiligen Fassung (23,24) festgelegt ist, und dass das Mittel (40) derart in der Fassung (22,23) angeordnet ist, dass es mit dem zugehörigen Mitnehmerstift (25,26) relativ zur Längsachse A als Scheitelpunkt einen Winkel α bildet, der zwischen 5° und 80°, bevorzugt 10° und 60°, besonders bevorzugt zwischen 15° und 50° und ganz besonders bevorzugt zwischen 20° und 45° liegt.

7. Zielfernrohr (10) nach Anspruch 4, **dadurch gekennzeichnet, dass** die Ausnehmung (28) kreisförmig ausgebildet ist.

## Claims

1. Telescopic sight (10) comprising an outer lens barrel (11), and an inner lens barrel (20) arranged inside it, wherein the inner lens barrel (20) has an optical reversing system with at least two optical elements (30, 31) enclosed in mountings (23, 24), which are mounted so they can be moved in the direction of the longitudinal axis (A) of the telescopic sights, wherein through the movement of the elements (30, 31) a change in the magnification can be effected, wherein the mountings (23, 24) are mounted enclosed pretensioned by an elastic means (40) in a guide sleeve (22), wherein the mountings (23, 24) have lateral surfaces (33, 34) and in at least one lateral surface (33, 34) a recess (28) is provided, and wherein the means (40) can be introduced to the recess (28), **characterised in that** the elastic means (40) is spherically formed and made of polytetrafluoroethylene, polyoxymethylene, polyether ether ketone or polyvinylidine fluoride.

2. Telescopic sight (10) according to Claim 1, **characterised in that** the recess (28) is a groove formed parallel to the longitudinal axis (A).

3. Telescopic sight (10) according to one of the above claims, **characterised in that** the mountings (23, 24) are mounted inside the guide sleeve (22) locally pretensioned in one direction by the means (40).

4. Telescopic sight (10) according to Claim 3, **characterised in that** at least two recesses (28) and two means (40) are present in each mounting (23, 24).

5. Telescopic sight (10) according to one of the Claims 3 or 4, **characterised in that** the means (40) is formed in such a way that a spot pre-tensioning to the bearing is present.

6. Telescopic sight (10) according to one of the Claims 3 to 5, **characterised in that** one driver pin (25, 26) is provided in the guide sleeve (22) in each case for the movement of the mountings (23, 24), which is fixed to the respective mounting (23, 24), and that the means (40) is arranged in the mounting (22, 23) in such a way that it forms an angle α as an apex with the respective drive pin (25, 26) relative to the longitudinal axis A, which lies between 5° and 80°, preferably between 10° and 60°, especially preferred between 15° and 50° and very much preferred between 20° and 45°.

7. Telescopic sight (10) according to Claim 4, **characterised in that** the recess (28) is formed in a circular shape.

## Revendications

1. Lunette de visée (10) comprenant un tube externe (11) et un tube interne (20) aménagé à l'intérieur de celui-ci, dans lequel le tube interne (20) présente un système inverseur optique avec au moins deux éléments optiques (30, 31) enchâssés dans des sertissages (23, 24), lesquels éléments sont montés de manière à être mobiles dans la direction de l'axe longitudinal (A) de la lunette de visée, dans laquelle une modification du grossissement peut être provoquée par le déplacement des éléments (30, 31), dans laquelle les sertissages (23, 24) sont montés dans une douille de guidage (22) précontraints par un moyen élastique (40), dans lequel les sertissages (23, 24) présentent des surfaces enveloppantes (33, 34) et il est prévu dans au moins une surface enveloppante (33, 34) un évidement (28), et dans lequel le moyen (40) peut être inséré dans l'évidement (28), **caractérisée en ce que** le moyen élastique (40) présente une forme sphérique et est constitué de polytétrafluoréthylène, de polyoxyméthylène, de polyétheréthercétone ou de poly(fluorure de vinylidène).

2. Lunette de visée (10) selon la revendication 1, **caractérisée en ce que** l'évidement (28) est une rainure conformée parallèlement à l'axe longitudinal (A).

3. Lunette de visée (10) selon l'une quelconque des revendications précédentes, **caractérisée en ce que** les sertissages (23, 24) sont montés dans la douille de guidage (22) localement précontraints dans une direction par le moyen (40).

4. Lunette de visée (10) selon la revendication 3, **caractérisée en ce que**, dans chaque sertissage (23, 24), il est respectivement prévu au moins deux évidements (28) et deux moyens (40).

5. Lunette de visée (10) selon l'une quelconque des revendications 3 ou 4, **caractérisée en ce que** le moyen (40) est conçu de sorte qu'il apparaisse une précontrainte ponctuelle par rapport au palier.

6. Lunette de visée (10) selon l'une quelconque des revendications 3 à 5, **caractérisée en ce que**, pour déplacer les sertissages (23, 24) dans la douille de guidage (22), il est prévu respectivement une broche d'entraînement (25, 26) qui est fixée au sertissage respectif (23, 24) et le moyen (40) est aménagé dans le sertissage (22, 23) de sorte qu'il forme avec la broche d'entraînement associée (25, 26) par rapport à l'axe longitudinal A comme sommet un angle α qui se situe entre 5° et 80°, de préférence entre 10° et 60°, tout particulièrement entre 15° et 50° et tout à fait nettement entre 20° et 45°.

7. Lunette de visée (10) selon la revendication 4, **caractérisée en ce que** l'évidement (28) a une forme circulaire.
